# EUROPEAN PATENT APPLICATION

(11) **EP 3 892 897 A1**
(43) Date of publication of application: **13.10.2021**
(21) Application number: 20175604.6
(22) Date of filing: 20.05.2020
(51) Int. Cl.: F16K 17/06, F16K 17/04, E03C 1/00, F16K 27/02, E03B 7/10

(54) **FORCED DISCHARGE VALVE AND FAUCET ASSEMBLY**

(30) Priority: 08.04.2020 CN 202020503197 U
(71) Applicant: Fujian Xihe Sanitary Ware Technology Co., Ltd., QuanZhou, Fujian 362304 (CN)
(72) Inventor: LIN, Xiaofa, QuanZhou, Fujian (CN); LIN, Xiaoshan, QuanZhou, Fujian (CN); FU, Qinchi, QuanZhou, Fujian (CN); DENG, Xiaoqing, QuanZhou, Fujian (CN)
(74) Representative: Murgitroyd & Company

(57) **Abstract**

This application discloses a forced discharge valve and a faucet assembly. The forced discharge valve (300) includes a valve body (310) and a valve core assembly (320). The valve body is provided with a valve chamber (313), a valve port (311) , and a pressure discharge port (312). The valve chamber includes a sealing chamber (313a) and a pressure relief chamber (313b) arranged along an axial direction of the valve chamber. The valve port is communicated with the sealing chamber. The pressure discharge port is communicated with the pressure relief chamber. The valve core assembly is arranged in the valve chamber and includes a valve core (321) configured to move between the sealing chamber and the pressure relief chamber so as to switch the valve port and the pressure discharge port between a communicated state and a non-communicated state, a fixing member (322) connected with the valve body, and an elastic resetting member (323) arranged between the valve core and the fixing member. The elastic resetting member is arranged to reset the valve core when a medium pressure is less than a thrust pressure applied by the elastic resetting member, so that the valve port and the pressure discharge port are in the non-communicated state. In this application, the medium pressure and the thrust pressure applied by the elastic resetting member act as driving pressures to move the valve core between the sealing chamber and the pressure relief chamber, thus switching the communication state of the valve port and the pressure discharge port and preventing the medium pipeline and the faucet assembly from bursting.

## Description

### Technical Field

The application relates to the technical field of valves, in particular to a forced discharge valve and a faucet assembly.

### Background

Valves are devices used to control the direction, pressure and flow rate of fluid in a fluid system. They are devices that allow the medium (liquid, gas or powder) in piping and equipment to flow or stop and can control its flow rate. Once the valve is damaged, it will cause leakage of medium and waste of resources. Even worse, if the medium is a toxic substance, it will cause potential life safety hazards.

The medium pressure is closely related to the service life of the valve. When the medium pressure exceeds a certain value, the valve core assembly of the valve will be greatly damaged. Especially in the outdoor environment in winter, when the temperature drops to the freezing point, the volume of the medium in the medium pipeline and the faucet assembly provided with the valve will expand after freezing, and the generated expansion pressure cannot be released, causing the medium pipeline and the faucet assembly to burst.

### Summary

The embodiments of the application provide a forced discharge valve and a faucet assembly, which are used for solving the problem of the medium pipeline or faucet assembly bursting caused by a high medium pressure.

An embodiment of the application provides a forced discharge valve including a valve body and a valve core assembly. The valve body is provided with a valve chamber including a sealing chamber and a pressure relief chamber arranged along an axial direction of the valve chamber; a valve port communicated with the sealing chamber; and a pressure discharge port communicated with the pressure relief chamber. The valve core assembly is arranged in the valve chamber and includes a valve core configured to move between the sealing chamber and the pressure relief chamber so as to switch the valve port and the pressure discharge port between a communicated state and a non-communicated state, a fixing member connected with the valve body, and an elastic resetting member arranged between the valve core and the fixing member. The elastic resetting member is arranged to reset the valve core when a medium pressure is less than a thrust pressure applied by the elastic resetting member, so that the valve port and the pressure discharge port are in the non-communicated state.

An embodiment of the application also provides a faucet assembly including a faucet body and a forced discharge valve. The faucet body includes a medium inlet, a medium outlet and a fluid passage communicated with the medium inlet and the medium outlet. The forced discharge valve is arranged on the faucet body and is communicated with the fluid passage.

In the embodiments of this application, the medium pressure and the thrust pressure applied by the elastic resetting member act as positive and negative driving pressures to move the valve core between the sealing chamber and the pressure relief chamber, thus switching the communication state of the valve port and the pressure discharge port, realizing the forced elimination of excess pressure in the medium pipeline and the faucet assembly, and preventing the medium pipeline and the faucet assembly from bursting.

Other features and advantages of the application will be set forth in the following description, and will become apparent in part from the description, or be understood through the implementation of the application. The purposes and other advantages of the application can be realized and obtained through the structures specially described in the specification and the drawings.

### Brief Description of Drawings

The drawings, which constitute a part of the specification, are used to provide a further understanding of the technical schemes of the application, together with the embodiments of the application are used to explain the technical schemes of the application, and do not constitute a limitation on the technical schemes of the application.
FIG. 1 is a structural view of a faucet assembly in an embodiment of the application;
FIG. 2 is a structural view of a forced discharge valve according to an embodiment of the application;
FIG. 3 is an exploded view of a forced discharge valve according to an embodiment of the application;
FIG. 4 is a sectional view of a forced discharge valve according to an embodiment of the application;
FIG. 5 is a view showing the working principle of the forced discharge valve according to an embodiment of the application; and
FIG. 6 shows the position of the fixing member of the forced discharge valve in the blasting test according to an embodiment of the application.

### Description of reference signs:

100- faucet assembly; 200- faucet body; 210- medium inlet; 220- medium outlet; 230-fluid passage; 300- forced discharge valve; 310- valve body; 311- valve port; 312- pressure discharge port; 313- valve chamber; 313a- sealing chamber; 313b- pressure relief chamber; 313c- filter chamber; 314- limiting protrusion; 315- through hole; 320- valve core assembly; 321- valve core; 321a- valve head; 321b- guide rod; 322- fixing member; 322a- pressure discharge hole; 323- elastic resetting member; 324- first sealing ring; 330- filter screen; 341-second sealing ring; 342- third sealing ring.

### Detailed Description

In order to make the purposes, technical schemes and advantages of the application clearer, the embodiments of the application will be described in detail below with reference to the drawings. It should be noted that the embodiments in this application and the features in the embodiments can be combined with each other arbitrarily if there is no conflict.

An embodiment of the application provides a forced discharge valve including a valve body and a valve core assembly. The valve body is provided with a valve chamber including a sealing chamber and a pressure relief chamber arranged along an axial direction of the valve chamber; a valve port communicated with the sealing chamber; and a pressure discharge port communicated with the pressure relief chamber. The valve core assembly is arranged in the valve chamber and includes a valve core configured to move between the sealing chamber and the pressure relief chamber so as to switch the valve port and the pressure discharge port between a communicated state and a non-communicated state, a fixing member connected with the valve body, and an elastic resetting member arranged between the valve core and the fixing member. The elastic resetting member is arranged to reset the valve core so that the valve port and the pressure discharge port are in the non-communicated state when the medium pressure is less than the thrust pressure applied by the elastic resetting member.

The technical scheme of the forced discharge valve of the application will be described in detail below with reference to the drawings.

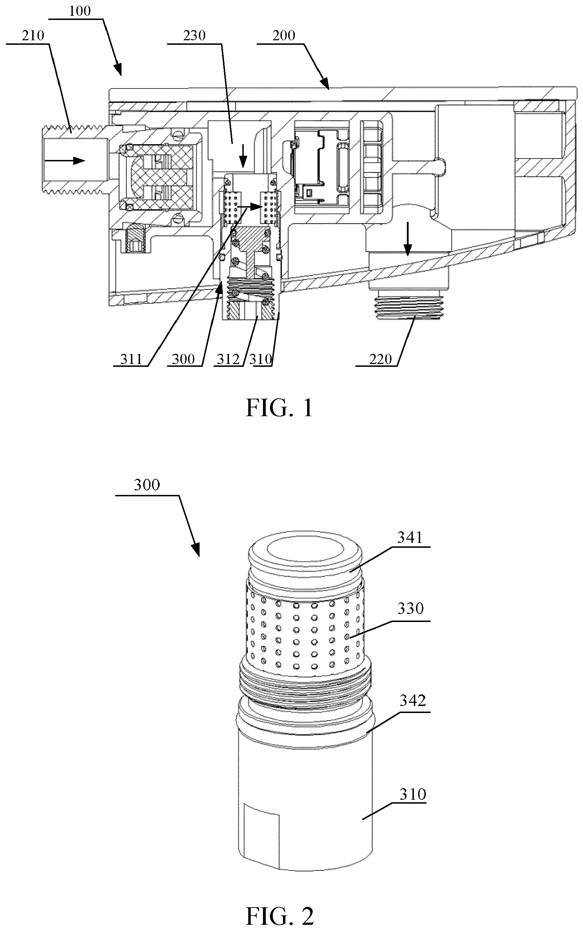

FIG. 1 is a structural view of a faucet assembly in an embodiment of the application. The faucet assembly 100 includes a faucet body 200 and a forced discharge valve 300 provided on the faucet body 200. The faucet body 200 is provided with a medium inlet 210, a medium outlet 220 and a fluid passage 230 communicating the medium inlet 210 with the medium outlet 220. The forced discharge valve 300 is provided on the faucet body 200. The forced discharge valve 300 includes a valve body 310 and a valve core assembly. The valve body 310 is provided with a valve port 311 and a pressure discharge port 312. The valve port 311 is communicated with the fluid passage 230 and the pressure discharge port 312 is communicated with the outside. An external thread is provided on the outer wall of the valve body 310. An internal thread is provided on the faucet body 200. The external thread and the internal thread are in threaded connection to fix the forced discharge valve 300 to the faucet body 200. Under normal working condition of the faucet assembly, the valve port 311 and the pressure discharge port 312 are in a non-communicated state. When the pressure in the fluid passage 230 is higher than a set value, the valve port 311 and the pressure discharge port 312 of the forced discharge valve 300 are communicated to relieve excess pressure from the fluid passage 230 and prevent the faucet assembly 100 from bursting and being damaged. In an example, the faucet body 200 includes an on/off valve that controls the open and close of the fluid passage 230. The position where the fluid passage 230 and the valve port 311 communicated with each other is between the medium inlet 210 and the on/off valve, which will not be described in detail herein. In this embodiment, the medium includes water, oil or gas. Preferably, the medium is water.

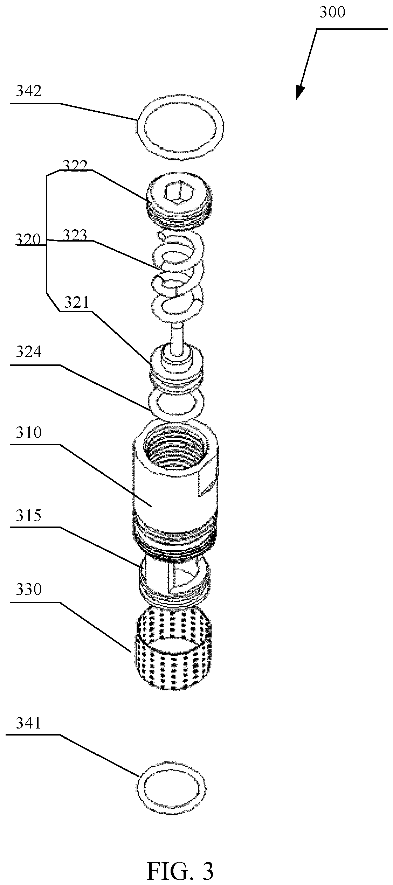

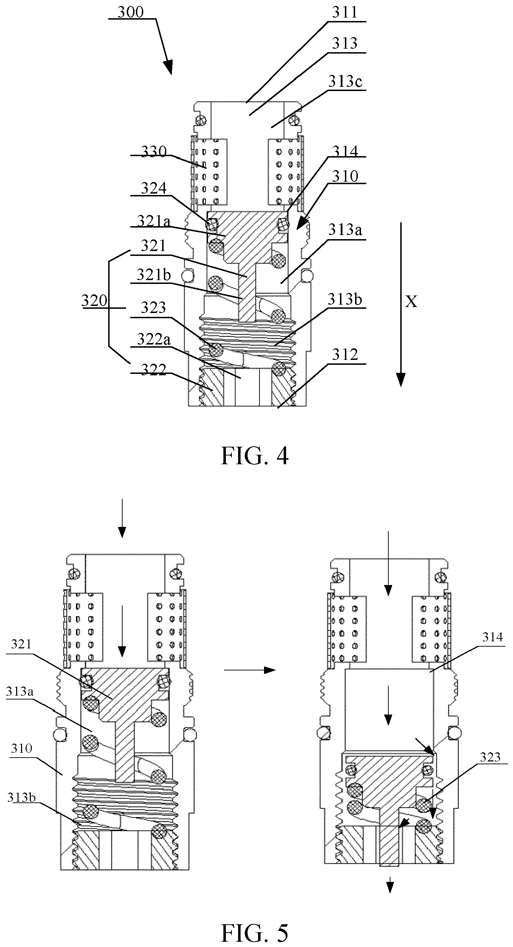

FIG. 2 is a structural view of the forced discharge valve according to an embodiment of the application. FIG. 3 is an exploded view of the forced discharge valve according to an embodiment of the application. FIG. 4 is a sectional view of the forced discharge valve according to an embodiment of the application. As shown in FIGs. 2-4, the forced discharge valve 300 includes a valve body 310 and a valve core assembly 320. The valve body 310 is provided with a valve port 311, a pressure discharge port 312 and a valve chamber 313. The valve chamber 313 includes a sealing chamber 313a and a pressure relief chamber 313b which are arranged along the axial direction of the valve chamber 313. The valve port 311 is communicated with the sealing chamber 313a, and the pressure discharge port 312 is communicated with the pressure relief chamber 313b. The axial direction of the valve chamber is the X-direction shown in FIG. 4. The valve core assembly 320 is disposed in the valve chamber 313. The valve core assembly 320 includes a valve core 321, a fixing member 322 connected to the valve body 310, and an elastic resetting member 323 disposed between the valve core 321 and the fixing member 322. The valve core 321 is configured to move between the sealing chamber 313a and the pressure relief chamber 313b to switch the valve port 311 and the pressure discharge port 312 between the communicated and non-communicated states. That is, when the valve core 321 is located at the sealing chamber 313a, the valve port 311 and the pressure discharge port 312 are in the non-communicated state; and when the valve core 321 is located at the pressure relief chamber 313b, the valve port 311 and the pressure discharge port 312 are in the communicated state. The elastic resetting member 323 is configured to reset the valve core 321 when the medium pressure is less than the thrust pressure applied by the elastic resetting member 323 so that the valve port 311 and the pressure discharge port 312 are in the non-communicated state. The fixing member 322 is arranged at the end of the valve body 310 provided with the pressure discharge port 312. The fixing member 322 is provided with a pressure discharge hole 322a. In an example, the valve body 310 has a tubular shape. The inner diameter of the valve body 310 at the sealing chamber 313a is less than the inner diameter of the valve body 310 at the pressure relief chamber 313b. The circumferential surface of the valve core 321 is provided as a first sealing surface. When the valve core 321 is located at the sealing chamber 313a, the first sealing surface is hermetically fitted with the inner wall of the valve body 310, thereby the valve port 311 and the pressure discharge port 312 are in the non-communicated state. When the valve core 321 is located at the pressure relief chamber 313b, a gap is formed between the first sealing surface of the valve core 321 and the inner wall of the valve body 310 to form a pressure relief channel through which the medium pressure can be discharged via the pressure discharge port 312.

In an exemplary embodiment, the length of the sealing chamber is less than the length of the pressure relief chamber along the axial direction of the valve chamber. In an example, the length of the sealing chamber is 0.5cm-3cm, and the length of the pressure relief chamber is 2cm-5cm. The sealing chamber is kept for a certain length, which can buffer the pressure fluctuation of the medium and avoid frequent opening of the forced discharge valve.

In an exemplary embodiment, as shown in FIG. 4, the valve core 321 includes a valve head 321a and a guide rod 321b connected to the valve head 321a. The diameter of the guide rod 321b is less than the diameter of the pressure discharge hole 322a. The guide rod 321b can be inserted into the pressure discharge hole 322a when the valve core 321 at least moves to the pressure relief chamber 313b, so that the movement of the guide rod 321b in the radial direction is restricted while allowing the normal pressure discharge through the pressure discharge hole 322a. In this embodiment, a first mounting groove is provided on the circumferential edge of the valve head 321a, and the valve core 321 includes a first sealing ring 324 disposed in the first mounting groove. The side of the first sealing ring 324 facing toward the inner wall of the valve body 310 forms a first sealing surface. The first sealing ring 324 may be an O-ring, and may improve the sealing between the valve core and the inner wall of the valve body.

In an exemplary embodiment, as shown in FIG. 4, the elastic resetting member 323 is a spring, which is abutted between the valve head 321a and the fixing member 322 and sleeved outside the guide rod 321b.

In an exemplary embodiment, as shown in FIG. 4, a limiting protrusion 314 extending into the valve chamber 313 is provided at the inner wall of the valve body 310 near the valve port 311. The limiting protrusion 314 is configured to prevent the valve core 321 from moving out of the valve port 311. In an example, the limiting protrusion 314 is of an annular structure. The end face of the valve core 321 facing the limiting protrusion 314 forms a second sealing surface, and the end face of the limiting protrusion 314 facing the valve core 321 forms a third sealing surface to be abutted against the second sealing surface.

According to the embodiment of the application, the medium pressure and the thrust pressure applied by the elastic resetting member act as positive and negative driving pressures, so that the valve core moves between the sealing chamber and the pressure relief chamber, thereby switching the communication state of the valve port and the pressure discharge port, realizing the forced elimination of excess medium pressure and preventing the medium pipeline and the faucet assembly from bursting.

The following further illustrates the technical scheme of the application through the working principle of the forced discharge valve in the embodiment of the application.

FIG. 5 is a view showing the working principle of the forced discharge valve according to the embodiment of the application. As shown in FIGs. 1 and 5, the forced discharge valve 300 is installed on the faucet body 200. The medium inlet 210 of the faucet body 200 is in communication with the medium pipeline. Under the normal working state, the valve head 321a of the forced discharge valve 300 abuts against the limiting protrusion 314 and is located in the sealing chamber 313a under the thrust pressure applied by the elastic resetting member 323. The valve port and the pressure discharge port are in a non-communicated state, as shown in the left figure of FIG. 5. When the medium pressure in the fluid passage 230 increases, the valve core 321 is pushed by the medium pressure, and when the medium pressure is greater than the thrust pressure applied by the elastic resetting member 323, the valve core 321 starts to move toward the pressure relief chamber 313b along the axis of the valve chamber so as to buffer the fluctuation of the medium pressure. When the medium pressure is greater than a set pressure, the elastic resetting member 323 is completely compressed into the pressure relief chamber 313b. At this point, the first sealing surface of the valve head 321a is separated from the inner wall of the valve body, and a gap is formed between the first sealing surface and the inner wall of the valve body 310 at the pressure relief chamber 313b. The gap in turn forms a pressure relief channel through which the medium pressure can be discharged to realize forced discharge of the medium pressure, as shown in the right figure of FIG. 5. When the medium pressure decreases, the elastic resetting member 323 resets the valve core 321, so that the valve port and the pressure discharge port are in the non-communicated state.

In this embodiment, the set pressure is configured as the limit pressure withstood by the on/off valve for use with the forced discharge valve. The limit pressure may be the safety pressure of the on/off valve or may be the upper limit pressure withstood by the on/off valve. The upper limit pressure is the limit pressure at which the valve core of the on/off valve normally operates without being damaged, i.e., the limit pressure in the valve blasting test. For example, the on/off valve is a thermostatic valve. When the forced discharge valve is used with the thermostatic valve, the set pressure of the valve core in thermostatic valve is less than or equal to 0.5MPa. In order to protect the thermostatic valve, the thrust pressure exerted on the valve core by the elastic resetting member is less than or equal to 0.5MPa. The on/off valve is a common valve. When the forced discharge valve is used in combination with the common valve, the set pressure is relatively high, and the thrust pressure exerted on the valve core by the elastic resetting member can be IMPa-2MPa. Besides, the forced discharge valve also has a warning function. When the forced discharge valve relieves pressure, the user can be informed that there is a problem with the medium pressure and the device should be checked as soon as possible to eliminate potential safety hazards.

According to the working principle of the embodiment of the application, the pressure in the medium pipeline and the faucet assembly can be eliminated and the medium pipeline and the faucet assembly can be prevented from bursting by using the on/off valve and the forced discharge valve in combination.

The above use environment is only an exemplary illustration of the embodiment of the application. The forced discharge valve of the embodiment of the application also has the functions of anti-freeze and anti-burst, and thus can be applied to colder regions in winter. The principle for preventing freezing and bursting is substantially the same as the pressure relief principle mentioned above. The principle of the freezing and bursting prevention is mainly as follows: the volume of the medium (especially water) in the medium pipeline and the faucet assembly will increase after freezing, thus generating a greater expansion pressure by which the valve core of the forced discharge valve is pushed; when the valve core of the forced discharge valve moves to the pressure relief chamber, the expansion pressure can be released, thus preventing the medium pipeline and the faucet assembly from bursting.

In an exemplary embodiment, a pressure relief groove extending along the axis of the valve chamber is provided on the inner wall of the valve body, and the valve chamber at the pressure relief groove forms the pressure relief chamber. In an example, there are a plurality of pressure relief grooves arranged at regular intervals along the circumferential direction of the pressure relief chamber. In another example, the pressure relief groove is communicated with the end of the valve body where the pressure discharge port is provided.

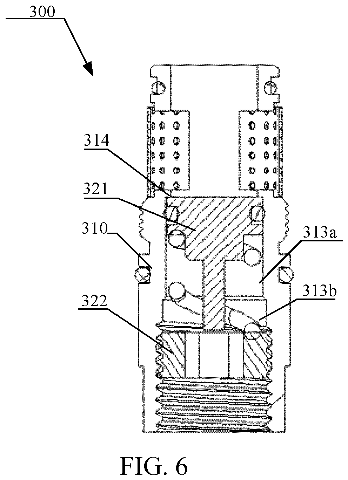

In an exemplary embodiment, the fixing member is in threaded connection with the inner wall of the valve body. The cross-section of the pressure discharge hole has a regular hexagonal shape, into which an Allen wrench can be inserted to facilitate installation of the fixing member. FIG. 6 shows the position of the fixing member of the forced discharge valve in the blasting test according to an embodiment of the application. In an example, as shown in FIG. 6, the internal thread of the valve body 310 for connecting with the fixing member 322 extends to the position of the pressure relief chamber 313b close to the sealing chamber 313a, so that when the faucet assembly is tested in a blasting test, the fixing member can be screwed into the pressure relief chamber to a position closer to the sealing chamber without disassembling the forced discharge valve. By doing so, the valve core is abutted against the limiting protrusion 314, so that the space in which the valve core is movable is reduced, and the valve port and the pressure discharge port can be kept in a non-communicated state even when the valve core is subjected to a pressure of 2.5MPa to 3.5MPa. Blasting test is an experimental means for testing the quality of valve products, which is mainly used for measuring the time under pressure and the limit pressure (bursting pressure) that the valve can withstand.

In an exemplary embodiment, as shown in FIG. 4, the valve chamber 313 further includes a filter chamber 313c disposed on the side of the sealing chamber 313a remote from the pressure relief chamber 313b. The valve port 311 is communicated with the sealing chamber 313a through the filter chamber 313c. In an example, the valve body 310 is provided with a filter hole at the filter chamber 313c, and the medium can flow into the valve port 311 and then flow out through the filter hole. In another example, as shown in FIGs. 3 and 4, the valve body 310 is provided with a through hole 315 at the filter chamber 313c. A filter screen 330 for covering the through hole 315 is provided on the outer wall of the valve body 310. The filter screen 330 has an annular shape and is sleeved outside the valve body 310. The medium flowing through the fluid passage of the faucet assembly can be filtered and impurities can be removed at the filter chamber, so as to protect precision components in the faucet assembly, such as the on/off valve or a motor.

In an exemplary embodiment, as shown in FIG. 2, the forced discharge valve further includes a second sealing ring 341 and a third sealing ring 342 arranged outside the valve body. The second sealing ring 341 is located at the end of the valve body where the valve port is arranged. The third sealing ring 342 is located in the middle of the valve body 310 and located at the position of the sealing chamber adjacent to the pressure relief chamber. The second sealing ring and the third sealing ring may be O-rings, which are not specifically defined herein.

An embodiment of the application also provides a faucet assembly, which includes a faucet body and the mentioned-above forced discharge valve. The faucet body includes a medium inlet, a medium outlet and a fluid passage communicated with the medium inlet and the medium outlet. The forced discharge valve is provided on the faucet body, and the valve port of the forced discharge valve is communicated with the fluid passage.

According to the embodiment of the application, by arranging the forced discharge valve on the fluid passage of the faucet assembly, an excess pressure is prevented from occurring in the fluid passage, and the bursting of the faucet assembly due to the excess pressure is avoided, improving the safety of the faucet assembly.

In the description of the embodiments of the application, unless otherwise clearly specified and defined, the terms "connection", "direct connection", "indirect connection", "fixed connection", "installation" and "assembly" shall be broadly understood. For example, they may be a fixed connection, a detachable connection or an integrated connection. The terms "installation", "connection" and "fixed connection" can refer to a direct connection, or an indirect connection through an intermediate medium, or an internal communication between two elements. For those of ordinary skill in the art, the specific meaning of the above terms in the application can be understood according to the context.

Although the embodiments of the application are disclosed as above, the disclosure is only embodiments provided for ease of understanding the application and is not intended to limit the application. Any skilled in the art to which this application pertains may make any modification and change in the forms and details of the embodiments. The protection scope of this application shall be defined by the appended claims.

## Claims

1. A forced discharge valve (300), **characterized in that**, it comprises:
a valve body (310) provided with:
a valve chamber (313) comprising a sealing chamber (313a) and a pressure relief chamber (313b) arranged along an axial direction of the valve chamber (313);
a valve port (311) communicated with the sealing chamber (313a); and
a pressure discharge port (312) communicated with the pressure relief chamber (313b); and
a valve core assembly (320) arranged in the valve chamber (313) and comprising:
a valve core (321) configured to move between the sealing chamber (313a) and the pressure relief chamber (313b) so as to switch the valve port (311) and the pressure discharge port (312) between a communicated state and a non-communicated state;
a fixing member (322) connected with the valve body (310); and
an elastic resetting member (323) arranged between the valve core (321) and the fixing member (322),
wherein the elastic resetting member (323) is arranged to reset the valve core (321) when a medium pressure is less than a thrust pressure applied by the elastic resetting member (323), so that the valve port (311) and the pressure discharge port (312) are in the non-communicated state.

2. The forced discharge valve (300) according to claim 1, **characterized in that**, the valve body (310) has a tubular shape, and an inner diameter of the valve body (310) at the sealing chamber (313a) is less than an inner diameter of the valve body (310) at the pressure relief chamber (313b).

3. The forced discharge valve (300) according to claim 1, **characterized in that**, a pressure relief groove extending along an axis of the valve chamber (313) is provided on an inner wall of the valve body (310), and the valve chamber (313) located at the pressure relief groove forms the pressure relief chamber (313b).

4. The forced discharge valve (300) according to any one of claims 1-3, **characterized in that**, the valve core (321) comprises a valve head (321a), wherein a circumferential surface of the valve head (321a) is configured as a sealing surface which is hermetically fitted with an inner wall of the valve body (310) at the sealing chamber (313a), and wherein a pressure relief channel is formed between the sealing surface and the inner wall of the valve body (310) at the pressure relief chamber (313b).

5. The forced discharge valve (300) according to any one of claims 1-3, **characterized in that**, the thrust pressure exerted on the valve core (321) by the elastic resetting member (323) is less than a set pressure which is configured as a limit pressure withstood by an on/off valve used in combination with the forced discharge valve (300).

6. The forced discharge valve (300) according to claim 5, **characterized in that**, the thrust pressure exerted on the valve core (321) by the elastic resetting member (323) is less than or equal to 0.5MPa.

7. The forced discharge valve (300) according to any one of claims 1-3, **characterized in that**, the fixing member (322) is in threaded connection with the valve body (310), and an internal thread of the valve body (310) for connecting with the fixing member (322) extends to a position of the pressure relief chamber (313b) close to the sealing chamber (313a).

8. The forced discharge valve (300) according to any one of claims 1-3, **characterized in that**, the valve chamber (313) further comprises a filter chamber (313c) provided on a side of the sealing chamber (313a) remote from the pressure relief chamber (313b), wherein the valve port (311) is communicated with the sealing chamber (313a) through the filter chamber (313c).

9. The forced discharge valve (300) according to claim 8, **characterized in that**, the valve body (310) is provided with a filter hole at the filter chamber (313c); or
a through hole (315) is provided in the valve body (310) at the filter chamber (313c), and a filter screen (330) for covering the through hole (315) is provided on an outer wall of the valve body (310).

10. A faucet assembly (100), **characterized in that**, it comprises a faucet body (200) and a forced discharge valve (300) according to any one of claims 1-9, wherein the faucet body (200) comprises a medium inlet (210), a medium outlet (220) and a fluid passage (230) communicated with the medium inlet (210) and the medium outlet (220), wherein the forced discharge valve (300) is arranged on the faucet body (200), and wherein the valve port (311) of the forced discharge valve (300) is communicated with the fluid passage (230).
